# EUROPÄISCHE PATENTSCHRIFT

(11) **EP 2 359 040 B1**
(45) Veröffentlichungstag und Bekanntmachung des Hinweises auf die Patenterteilung: **12.12.2012**
(21) Anmeldenummer: 09744072.1
(22) Anmeldetag: 24.10.2009
(51) Int. Cl.: F16K 27/02

(54) **VENTIL UND MONTAGEVERFAHREN**
VALVE AND ASSEMBLY METHOD
VANNE ET PROCÉDÉ DE MONTAGE

(30) Priorität: 19.11.2008 DE 102008058263
(43) Veröffentlichungstag der Anmeldung: 24.08.2011
(73) Patentinhaber: Robert Bosch GmbH, 70469 Stuttgart (DE)
(72) Erfinder: FESER, Hubert, 97737 Gemünden-Adelsberg (DE)
(74) Vertreter: Thürer, Andreas
(86) Internationale Anmeldenummer: PCT/EP2009/007618
(87) Internationale Veröffentlichungsnummer: WO 2010/057560

(56) Entgegenhaltungen:
- EP-B1- 0 798 471
- DE-A1- 4 240 838
- JP-A- 2003 343 753

## Beschreibung

Die Erfindung betrifft ein Ventil zum Einbau in eine Ventilbohrung gemäß dem Oberbegriff des Patentanspruchs 1. Die Erfindung betrifft des Weiteren ein Montageverfahren für ein solches Ventil.

Unter der Bezeichnung 2/2-Wege-Einbauventile bietet die Bosch Rexroth AG gemäß den Datenblättern RD 21010 und RD 21050 Sitz- oder Sitzschieberventile an, welche aus einer Ventilbuchse zum Einsetzen in eine Einbaubohrung nach DIN ISO 7368 und einem die Einbaubohrung abschließenden Steuerdeckel aufgebaut sind. Mittels im Steuerdeckel vorhandener Steuerkanäle und ggf. einer Vorsteuerventilanordnungen wird der Federraum eines in die Ventilbuchse eingesetzten Ventilkolbens angesteuert. Vorzüge dieser auch als Logikventile bzw. einstufige Logikventile bezeichneten Ventilsysteme sind die hohe Variabilität, die robuste Beschaffenheit und die auch bei einem hohen Nennvolumenstrom kostengünstige Darstellung. Die Weiterentwicklung dieses Konzepts hat zur Konstruktion der sog. Aktivlogikventile - auch zweistufige und dreistufige Logikventile - geführt, welche einen verlängerten Ventilkolben aufweisen, der in den Steuerdeckel hineinragt, und an dem ein Betätigungskolben gebildet ist, welcher weitere Flächen für die hydraulische Verstellung des Ventilkolbens zur Verfügung stellt. Diese weiteren Flächen können z.B. für einen schnellen, unabhängig von den Drücken in der Ventilbohrung ausführbaren Öffnungsvorgang oder Schließvorgang verwendet werden.

Herkömmliche Aktivlogikventile besitzen oft eine in den Steuerdeckel verlängerte Ventilbuchse, die den Ventilkolben vollständig aufnimmt, wie es die EP 0 798 471 B1 zeigt. Dies verringert aufgrund der an der Ventilbuchse benötigten Wandstärken bei vorgegebener Einbaubohrung (im Folgenden auch Ventilbohrung) die zur Verfügung stehenden Steuerquerschnitte und damit den maximalen Nennvolumenstrom des Ventils.

Andere Aktivlogikventile führen den Betätigungskolben des Ventilkolbens zwar im Steuerdeckel, wie z.B. die im Katalog HY14-3201/US dargestellte Ventile "Active Cartridge Valves - Monitored, Series C13DCC and C18DCC" der Parker Hannifin Corporation, Ohio, USA. Der Steuerdeckel ist jedoch aufgrund der Vielzahl an Kanälen schwierig zu fertigen. Die im Steuerdeckel einzuspannende Feder verhindert die Bereitstellung von Deckel und Ventilbuchse als vormontierte Baueinheit. Es werden im Vergleich zu den einstufigen Logikventilen geringere Stückzahlen benötigt, was die Herstellung der gegenüber den einstufigen Logikventilen jeweils unterschiedlichen Bauteile Steuerdeckel, Ventilbuchse und Ventilkolben, unverhältnismäßig verteuert. Eine Bereitstellung funktioneller Varianten ist mit hohem Aufwand verbunden, da dazu die einzelnen Bauteile für sich geändert werden müssten.

Die DE 42 40 838 A1 zeigt ein herkömmliches 2/2-Wegeventil mit einem teilweise druckausgeglichenen Ventilkolben. Durch einen Trennkörper lässt sich ein Betätigungsdruckraum des Ventils von einem für den Druckausgleich des Ventilkolbens vorgesehenen Druckraum abgrenzen, denn der am Ventileingang A anstehende Druck wirkt sowohl an der Stirnfläche des Ventilkolbens als auch an dessen rückseitiger Ringfläche. Der Trennkörper ist in die Ventilbuchse eingesetzt und überragt diese axial. Er wird dazu verwendet, um die Betätigungsfläche des Ventilkolbens gegenüber dessen Stirnfläche auf die Stirnfläche des Betätigungsstiftes zu verringern. Der Ventildeckel nimmt den die Ventilbuchse überragenden Abschnitt des Trennkörpers auf und stützt diesen gegen in Richtung des Ventildeckels gerichtete Kräfte ab.

Die Erfindung beruht auf der Aufgabe, ein verbessertes Ventil der eingangs genannten Art, welches sich insbesondere kostengünstig darstellen lässt, zur Verfügung zu stellen.

Diese Aufgabe wird durch ein Ventil mit den Merkmalen des Patentanspruchs 1 gelöst.

Dadurch, dass der über einer Ventilbohrung anzuordnende Ventildeckel axial in zwei Bauteile - einen Zwischendeckel und einen Funktionsdeckel mit Steuerkanal - unterteilt ist, wird ein einfach aufgebautes und kostengünstig zu fertigendes zweistufiges oder dreistufiges Logikventil bereitgestellt. Zudem können mit geringem Aufwand eine hohe Zahl an Varianten zur Verfügung gestellt werden. Der Zwischendeckel bildet nicht nur den Aufnahmeraum für den Betätigungsabschnitt sondern bildet darüber hinaus eine vorgebbare, z.B. genormte Schnittstelle zwischen dem Gehäuse in welches die Ventilbuchse eingesetzt wird und einem Funktionsdeckel, durch welchen hydraulische Funktionen und Schaltbilder des Ventils aus einer Vielzahl von Varianten festgelegt werden. Es können z.B. vorhandene aus den herkömmlichen einstufigen Logikventilbaureihen bekannte Steuerdeckel ohne Modifikation als Funktionsdeckel zum Einsatz kommen, da der Zwischendeckel die dafür benötigte Schnittstelle zur Verfügung stellt. Weiterhin können aus den einstufigen Logikventilbaureihen bekannte, einfach aufgebaute Ventilbuchsen zum Einsatz kommen, da der Betätigungsabschnitt des Ventilkolbens im Zwischendeckel geführt ist.

Für die Bereitstellung einer Vielzahl von Ventilvarianten genügt es, je Nenngröße und zur Unterscheidung zwischen zweistufigen und dreistufigen Schaltbildern jeweils nur wenige, ggf. auch nur einen Zwischendeckel vorzusehen. Hinsichtlich der Ventilbuchse sind nur die Varianten Sitzventil oder Sitzschieberventil zu unterscheiden. Hinsichtlich des Funktionsdeckels sind in den Datenblättern RD 21010 und RD 21050 der Bosch Rexroth AG eine Vielzahl von effizient mit wenigen Steuerdeckeln und Vorsteuerventilen ausführbare Vorsteuervarianten für einstufige Logikventile beschrieben, welche nun auch für zweistufige und dreistufige Logikventile eingesetzt werden können. Die zweiteilige Ausführung des Ventildeckels erlaubt es zudem, eine Ventilfeder erst bei der Montage einzuspannen, so dass die für den Transport einer vorgespannten Feder erforderliche Transport- und Verliersicherung entfällt.

Zudem unterteilt der Betätigungsabschnitt die Hauptbohrung in einen funktionsdeckelseitigen Betätigungsdruckraum und in einen ventilbuchsenseitigen Betätigungsdruckraum, und im Zwischendeckel ist ein Steuerkanal zu dem ventilbuchsenseitigen Betätigungsdruckraum vorgesehen. Dies erleichtert die Ansteuerung des zwei- oder dreistufigen Logikventils mittels des herkömmlichen Anschlussbilds am Ventilgehäuse.

Die Aufgabe wird ebenfalls durch ein Montageverfahren zur Bereitstellung eines solchen Ventils gelöst.

Die Bereitstellung einer vormontierten Baueinheit erleichtert und verkürzt die Montage und senkt die Fehlerrate bei der Endmontage. Die Ventilbuchse, der Zwischendeckel und der Ventilkolben sind bei einer Vielzahl der Ventilvarianten gleich und lassen sich daher beim Hersteller zusammenfassen, um so die Qualität der Logistik zu verbessern und um den logistischen Aufwand zu verringern.

Vorteilhafte Ausgestaltungen der vorliegenden Erfindung sind in den Unteransprüchen angegeben.

Wenn die vormontierten Baueinheit Dichtmittel umfasst, lassen sich diese in vorteilhafter Weise für einen für den Transport ausreichenden Zusammenhalt der einzelnen Bauteile einsetzen.

Gemäß einer bevorzugten Ausgestaltung ist eine Bodenfläche der Hauptbohrung des Zwischendeckels am Funktionsdeckel - insbesondere an einer Stirnfläche des Funktionsdeckels - gebildet. Eine derartige axiale Unterteilung des Ventildeckels erleichtert die Abdichtung an der Trennstelle. Zudem ist die Fertigung einfacher, da der Zwischendeckel hauptsächlich mit der Bewegungsachse des Ventilkolbens parallel Bohrungen aufweist. Insbesondere erleichtert eine solche Unterteilung des Ventildeckels das Einsetzen einer Feder.

Gemäß einer besonders bevorzugten Ausgestaltung weist der Funktionsdeckel Mittel zur Darstellung einer hydraulischen Funktion auf, welche insbesondere umfassen können: ein Vorsteuerventil bzw. eine Einbaubohrung für ein solches, eine Drossel, eine Anschlussfläche für ein Vorsteuerventil, eine Hubbegrenzung, einen Wegsensor, eine Schaltstellungsüberwachung. Diese für einstufige Logikventile an sich bekannten Varianten können nun erstmals mit geringem Aufwand an einem zwei- oder dreistufigen Logikventil - also einem Aktivlogikventil - eingesetzt werden.

Aber auch der Zwischendeckel kann Mittel zur Darstellung einer hydraulischen Funktion aufweisen, um die Variantenvielzahl zu erhöhen oder um bisher nicht oder nur schwer darstellbare Funktionen zu erhalten. Diese können insbesondere umfassen: eine Betätigungssperre, eine Hubbegrenzung, einen Wegsensor, eine Schaltstellungsüberwachung, eine Drossel, ein Vorsteuerventil.

Vorzugsweise ist der Ventilkolben mit dem Betätigungsabschnitt einstückig ausgebildet. Vorzugsweise sollen Zugkräfte und Schubkräfte spielfrei vom Betätigungsabschnitt auf den Ventilkolben übertragen werden können, wozu der Betätigungsabschnitt z.B. auch an einem Betätigungskolben gebildet sein kann, welcher an dem Ventilkolben axial spielfrei befestigt ist.

Wenn auf der dem Funktionsdeckel zugewandten Stirnseite des Zwischendeckels zumindest hinsichtlich von Steueranschlüssen ein normiertes Anschlussbild, insbesondere gemäß der DIN ISO 7368 vorhanden ist, lassen sich eine Vielzahl vorhandener Steuerdeckel ohne oder mit geringer Modifikation verwenden.

Wenn zwischen der Ventilbuchse und dem Ventilkolben Dichtungsmittel vorgesehen sind, kann die Dichtigkeit des Ventils verbessert werden. Zudem ist ein radiales Spiel möglich, sodass geringere Fertigungstoleranzen gefordert werden müssen. Selbiges gilt, falls zwischen dem Betätigungsabschnitt und der Hauptbohrung des Zwischendeckels Dichtungsmittel vorgesehen sind. Es kann also beispielsweise zwischen der Ventilbuchse und dem Ventilkolben oder zwischen dem Betätigungsabschnitt und der Hauptbohrung eine Spielpassung, insbesondere eine Spielpassung H7/e5, H7/f6, oder H7/g5 bzw. H8/e5, H8/f6, oder H8/g5 gemäß der DIN 7157 akzeptiert werden. Eine Feinbearbeitung des Ventilkolbens kann damit entfallen.

Vorzugsweise sind Steueranschlüsse und/oder Befestigungsmittel bezüglich der Hauptbohrung des Zwischendeckels so angeordnet, dass eine Ausrichtung des Zwischendeckels in vorgegebenen Winkelschritten um die Ventilbohrung veränderbar ist. Dadurch kann ein Steuerkanal für den funktionsdeckelseitigen Betätigungsdruckraum bzw. für den ventilbuchsenseitigen Betätigungsdruckraum mit unterschiedlichen Steueranschlüssen des Gehäuses bzw. des Ventilblocks verbunden werden, und so z.B. das Schaltbild des Ventils verändert werden. Vorzugsweise ist dazu an einer dem Funktionsdeckel abgewandten Stirnseite des Zwischendeckels ein Fixierstift zur Festlegung einer Winkelausrichtung des Zwischendeckels lösbar befestigt.

Wenn die Hauptbohrung an einer funktionsdeckelseitigen Mündung einen kleineren Querschnitt als an einer funktionsdeckelabseitigen Mündung aufweist, kann aufgrund der kleineren druckbeaufschlagten Fläche an der Trennstelle eine hohe Druckbelastung, z.B. 500 bar anstelle der üblichen 420 bar bzw. 350 bar akzeptiert werden.

Nachfolgend werden die vorliegende Erfindung und deren Vorteile unter Bezugnahme auf das in den Figuren dargestellte Ausführungsbeispiel näher erläutert.
- Figur 1: stellt ein erfindungsgemäßes 2/2-Wegeventil im Schnitt dar, welches einen 2-stufigen Aufbau besitzt - einen Hauptsteuerabschnitt und einen Betätigungsabschnitt -,
- Figur 2a: stellt eine Variante des in Figur 1 gezeigten Ventils dar, welches als Sperrventil konfiguriert ist,
- Figur 2b: zeigt den hydraulischen Schaltplan eines Ventils gemäß Figur 2a, welches mit einer Vorsteuerventilkonfiguration versehen ist,
- Figur 3: zeigt eine weitere Variante des in Figur 1 gezeigten Ventils, welches als schnelles Sperrventil ausgebildet ist und mit einer Hubbegrenzung versehen ist,
- Figur 4a: zeigt als Variante des in Figur 1 gezeigten Ventils einen dreistufigen Ventilaufbau, mit einem Hauptsteuerabschnitt und einem zweistufigen Betätigungsabschnitt, welcher eine zusätzliche Betätigungsftäche aufweist, und
- Figur 4b: stellt eine Variante des in Figur 4a gezeigten Ventils dar, bei dem eine Wegmessvorrichtung in den Ventildeckel integriert ist.

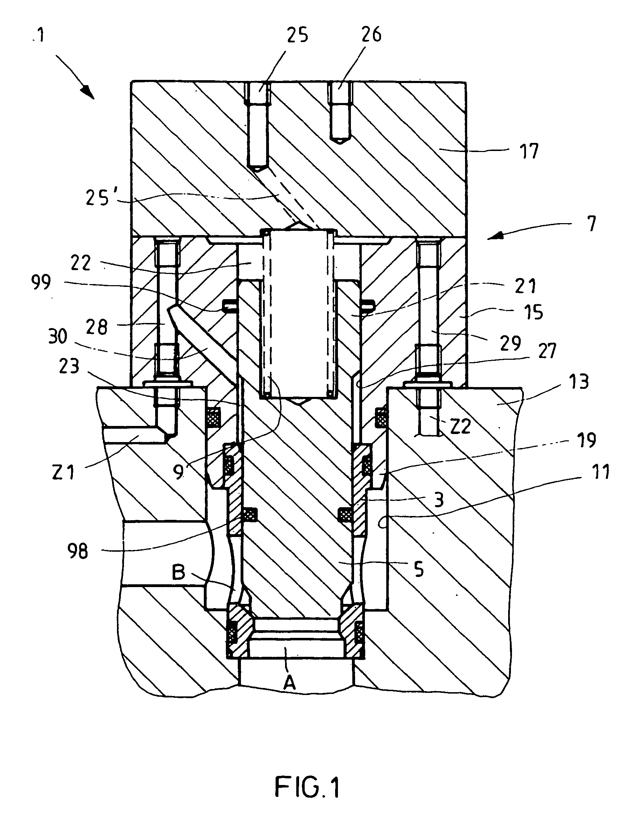

In Figur 1 ist ein Ventil 1 für hydraulische Anwendungen, genauer gesagt ein mittels eines Betätigungskolbens verstellbares 2/2-Wegeventil, auch Aktiviogikventil genannt, dargestellt. Das Ventil 1 verfügt über eine Ventilbuchse 3, einen in die Ventilbuchse 3 eingesetzten Ventilkolben 5, einen Ventildeckel 7 sowie eine zwischen dem Ventilkolben 5 und dem Ventildeckel 7 angeordnete Feder 9. Die Ventilbuchse 3 ist mit dem darin befindlichen Ventilkolben 5 in die Ventilbohrung 11 eines Steuerblocks 13 eingesetzt. Darin sind Kanäle für die Verbraucheranschlüsse A, B und die Steueranschlüsse X, Y (nicht dargestellt), Z1, Z2 für das Ventil 1 vorhanden. Der Ventildeckel 7 ist über der Ventilbohrung 11 auf den Steuerblock 13 aufgeschraubt. Die Ventilbohrung 11 und die Anordnung der Steueranschlüsse X, Y, Z1, Z2 entspricht der DIN ISO 7368.

Das Ventil gliedert sich grob in eine Hauptstufe und in eine Betätigungsstufe. Die Hauptstufe ist durch den in die Ventilbuchse 3 eingesetzten Ventilkolben 5 gebildet, welcher in Zusammenwirken mit einer in der Ventilbuchse 3 vorgesehenen Sitzfläche den Öffnungsquerschnitt zwischen den Verbraucheranschlüssen A und B steuert. Die Betätigungsstufe bilden der Ventildeckel 7 und der Ventilkolben 5 mit einem radial vorspringenden Betätigungsabschnitt 21, welcher unter Ausbildung der Betätigungsdruckräume 22 und 23 vom Ventildeckel 7 aufgenommen ist. Die Betätigungsdruckräume 22 und 23 werden über die Steueranschlüsse X, Y (nicht dargestellt), Z1, Z2 angesteuert. Ggf. sind Vorsteuerventile zwischengeschaltet. Anschlusskanäle 25 und 26 für Vorsteuerventile sind auf dem Ventildeckel 7 angedeutet.

Der Ventildeckel 7 untergliedert sich axial in einen Zwischendeckel 15, welcher unmittelbar auf dem Steuerblock 13 befestigt ist, und einen Funktionsdeckel 17, welcher auf den Zwischendeckel 15 aufgesetzt ist.

Im Zwischendeckel 15 ist eine Hauptbohrung 27 zur Aufnahme des Ventilkolbens 5 bzw. dessen Betätigungsabschnitts 21 vorgesehen. Diese setzt sich in Richtung des Steuerblocks 13 in einen axial in die Ventilbohrung 11 vorstehenden Ringkragen 19 fort. Im Ringkragen 19 erweitert sich die Hauptbohrung 27 an einer Stufe, um die Ventilbuchse 3 aufzunehmen. Im Zwischendeckel 15 sind des Weiteren Nebenbohrungen 28, 29 achssymmetrisch um die Hauptbohrung 27 vorhanden. Diese dienen als Steuerkanäle. Von der Nebenbohrung 28 zweigt eine Bohrung 30 quer bzw. diagonal ab, um diese mit dem Betätigungsdruckraum 23 zu verbinden. Die Bohrung 30 kann alternativ auch rechtwinklig abzweigend ausgeführt sein. Außerdem kann auch von der Bohrung 29 eine Querbohrung zum Betätigungsdruckraum 23 hin und in diesen mündend ausgeführt sein (nicht dargestellt). Eine der besagten Querbohrungen - einschließlich der Bohrung 30 - kann durch einen Stopfen verschlossen werden, falls die entsprechende fluidische Verbindung nicht benötigt wird. Im übrigen sind die Hauptbohrung 27 und die Nebenbohrungen 28 und 29 so ausgeführt und angeordnet, dass sich an der dem Funktionsdeckel 17 zugewandten Stirnseite des Zwischendeckels 15 das gleiche Anschlussbild ergibt, welches auch an der Oberseite des Steuerblocks 13 vorhanden ist. Bestimmte Abweichungen sind jedoch vorteilhaft. Solche werden später noch beschrieben.

Der Funktionsdeckel 17 schließt die Hauptbohrung 27 mit seiner dem Zwischendeckel 15 zugewandten Stirnseite ab und bildet eine Anlagefläche für die Feder 9. Ein Steuerkanal 25' führt durch den Funktionsdeckel 17 in den Betätigungsdruckraum 22. Dies kann unter Zwischenschaltung eines Vorsteuerventils erfolgen, für welches die Anschlüsse 25 und 26 auf der dem Zwischendeckel 15 abgewandten Stirnseite des Funktionsdeckels 17 vorgesehen sind. Nichtbenötigte Steueranschlüsse werden durch das Fehlen einer entsprechenden Bohrung im Funktionsdeckel 17 an der Trennfläche zwischen Zwischendeckel 15 und Funktionsdeckel 17 abgesperrt.

In der Fertigung werden der Zwischendeckel 15, der Ventilkolben 5, die Buchse 3 und ggf. die Feder 9 als vormontierte Baueinheit zusammengestellt. Dichtringe 98 und 99 zwischen dem Zwischendeckel 15 und dem Ventilkolben 5, bzw. zwischen dem Ventilkolben 5 und der Ventilbuchse 3 sorgen für einen für den Transport ausreichenden Zusammenhalt der Bauteile. Die Feder 9 ist nicht vorgespannt und daher einfach zu transportieren. Der Einsatz der beschriebenen Dichtringe 98 und 99 erlaubt zudem die Vergrößerung der Passungsspiele zwischen den Bauteilen, insbesondere zwischen dem Ventilkolben 5 und der Ventilbuchse 3. Dies vereinfacht die Fertigung, da keine Feinbearbeitung des Ventilkolbens 5 benötigt wird. Der Funktionsdeckel 17 wird gemäß dem gewünschten hydraulischen Schaltbild konfiguriert und separat zur Verfügung gestellt. Es steht die Vielzahl der in den eingangs genannten Datenblättern RD 21010 und RD 21050 aufgeführten Steuerdeckel zu Verfügung.

Der Einbau bzw. Anbau des Ventils 1 in den Steuerblock 13 gestaltet sich wie folgt. Zunächst wird die vormontierte Baueinheit aus Zwischendeckel 15, Ventilkolben 5 und Ventilbuchse 3 in die Ventilbohrung 11 eingesetzt und auf dem Steuerblock 13 ausgerichtet und befestigt. Die Feder 9 wird in den Ventilkolben 5 eingesetzt. Danach wird der Funktionsdeckel 17 auf dem Zwischendeckel 15 montiert. Dabei kann die Befestigung des Zwischendeckels 15 und des Funktionsdeckels 17 separat auf der jeweiligen Unterlage erfolgen. Der Funktionsdeckel 17 und der Zwischendeckel 15 können aber auch gemeinsam mit Schrauben, welche am Funktionsdeckel 17 mit Ihrem Kopf aufliegen und durch den Zwischendeckel 15 hindurch geführt sind, am Steuerblock 13 befestigt werden.

Der Zwischendeckel 15 besitzt an der dem Steuerblock 13 zugewandten Stirnfläche einen Stift, welcher in eine Bohrung des Steuerblocks 13 (siehe Buchstabe G in DIN ISO 7368, welche durch Verweis der Offenbarung zuzurechnen ist) aufgenommen wird, um so die Winkelausrichtung des Zwischendeckels 15 festzulegen. Der Stift ist entfernbar am Zwischendeckel befestigt, so dass der Zwischendeckel in anderer Winkelausrichtung montiert werden kann. Sinnvoller Weise werden Winkelausrichtungen verwendet, welche sich in Schritten von 90°, 180° oder 270° von der ursprünglich festgelegten Winkelausrichtung unterscheiden. So kann z.B. der Kanal zum Betätigungsdruckraum 23 über die Bohrungen 28 und 30 auch einem anderen Steueranschluss, z.B. Z2, X, oder Y zugeordnet werden. Dadurch wird die Variantenvielfalt der realisierbaren Schaltbilder erhöht. Ggf. sind am Zwischendeckel 15 weitere Aufnahmen für den Stift gebildet, welche die Montage des Zwischendeckels 15 in den beschriebenen alternativen Winkelausrichtungen festlegen.

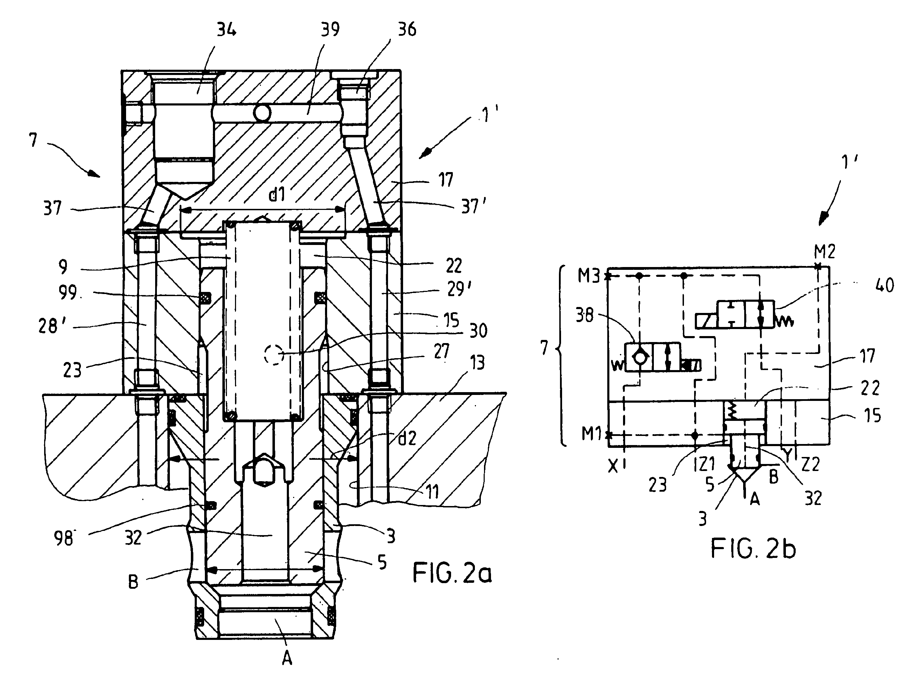

In den Figuren 2a und 2b ist eine Variante 1' zu dem in Figur 1 dargestellten Ventil 1 gezeigt. In Figur 2a ist ein Schnittbild des Ventils 1' gezeigt, während die Figur 2b das hydraulische Schaltbild zeigt.

Das Ventil 1' entspricht im Wesentlichen dem Ventil 1. Die Unterschiede bzw. Abwandlungen werden nachfolgend erläutert. Während der Ventilkolben 5 des Ventils 1 aus den Anschlüssen A und B in Öffnungsrichtung direkt beaufschlagbare Flächen aufweist, besitzt der Ventilkolben 5 des Ventils 1' nur eine vom Druckmittel im Anschluss A direkt beaufschlagbare Fläche. Eine aus dem Anschluss B direkt beaufschlagbare Fläche ist bei dieser Variante nicht vorgesehen. Des Weiteren ist ein Kanal 32 im Ventilkolben 5 vorhanden, welcher den Betätigungsdruckraum 22 zwischen den Ventilkolben 5 und dem Funktionsdeckel 17 mit dem Anschluss A verbindet. Die Ventilbuchse 3 entspricht in Ihrer Länge der Tiefe der Einbaubohrung. Sie schließt im eingesetzten Zustand an der Mündung der Ventilbohrung 11 bündig mit der Oberfläche des Steuerblocks 13 ab. Die dem Zwischendeckel 15 zugewandte Stirnfläche der Ventilbuchse 3 liegt an der planen, ihr zugewandten Stirnfläche des Zwischendeckels 15 an.

Der Zwischendeckel 15 besitzt eine Hauptbohrung 27, welche selbst an Ihrer weitesten Stelle einen geringeren Durchmesser d1 aufweist als der Durchmesser d2 an der Mündung der Ventilbohrung 11. Dadurch sinken die hydrostatischen Kräfte, mit denen der Funktionsdeckel 17 belastet wird, und es können höhere Betriebsdrücke zugelassen werden. Die Darstellung der Figur 2a ist im Vergleich zur Figur 1 um 90° gedreht, so dass nun die Steueranschlüsse X und Y sowie die entsprechenden Nebenbohrungen 28' und 29' im Zwischendeckel 15 sichtbar sind.

Der Steüerdeckel 17 besitzt zwei Einbaubohrungen 34 und 36 zur Aufnahme von Vorsteuerventilen. Diese sind über im Steuerdeckel verlaufende Bohrungen 37 und 37' mit den Nebenbohrungen 28' und 29' des Zwischendeckels 15 und mit dem Steueranschluss X bzw. Y verbunden. Eine weitere Bohrung 39 verbindet die Einbaubohrungen 34 und 36 über die Bohrungen 28 (nicht dargestellt) und 30 mit dem Betätigungsdruckraum 23.

Das Schaltbild in Figur 2b zeigt das Ventil 1' mit einer beispielhaften Vorsteuerventilkonfiguration. Der Zwischendeckel 15 und der Funktionsdeckel 17 sowie der Ventilkolben und die Ventilbuchse 3 sind schematisch dargestellt. Als Vorsteuerventile sind ein seinerseits vorgesteuertes 2/2-Wege-Sitzventil 38 sowie ein 2/2-Wege-Schaltventil 40 in die Einbaubohrungen 34 bzw. 36 eingesetzt. Beide Vorsteuerventile 38 und 40 sind elektrisch betätigbar. Der Betätigungsdruckraum 22 ist mit dem Anschluss A über den Kanal 32 verbunden. Der Betätigungsdruckraum 23 ist über das Vorsteuerventil 38 mit der Steuerölzuleitung X bzw. über das Vorsteuerventil 40 mit dem Entlastungsanschluss Y verbunden.

Die Funktion des Ventils 1' ist die eines Sperrventils. Der Druck des Druckmittels in Anschluss A bewirkt durch den Flächenüberschuss der Fläche, mit welcher der Ventilkolben 5 den Betätigungsdruckraum 22 begrenzt, gegenüber der Stirnfläche des Ventilkolbens 5, welche dem Anschluss A zugewandt ist, eine resultierende Kraft, welche ein Schließen des Ventils bewirkt, solange der Druckraum 23 entlastet ist. Dies ist im unbetätigten Zustand der Vorsteuerventile 38 und 40 der Fall. Bei Betätigung beider Vorsteuerventile 38 und 40 wird der Betätigungsdruckraum 23 von dem Entlastungsanschluss Y getrennt und mit der Steuerölzuleitung X verbunden. Einen ausreichenden Druck in der Steuerölzuleitung X vorausgesetzt, öffnet der Ventilkolben 5 durch die nun vom Betätigungsdruckraum 23 aus auf den Betätigungsabschnitt 21 einwirkende hydrostatische Kraft die Verbindung zwischen den Verbraucheranschlüssen A und B. Sicherheitsanforderungen werden dahingehend erfüllt, dass nur bei ordnungsgemäß funktionierender Betätigung beider Vorsteuerventile 38 und 40 die Verbindung zwischen A und B öffnen kann. Unterbleibt z.B. die Betätigung des Vorsteuerventils 40, kann sich im Betätigungsdruckraum 23 kein ausreichender Druck für eine Öffnung des Ventilkolbens 5 einstellen.

Verbindet man in einer Anwendung die Steuerölzuleitung X mit dem Anschluss B, so ist bei betätigten Vorsteuerventilen 38 und 40 zudem eine Rückschlagventilfunktion des Ventils 1' gegeben. Das Ventil 1' öffnet für die Strömungsrichtung B->A und schließt gegenüber der Strömungsrichtung A->B.

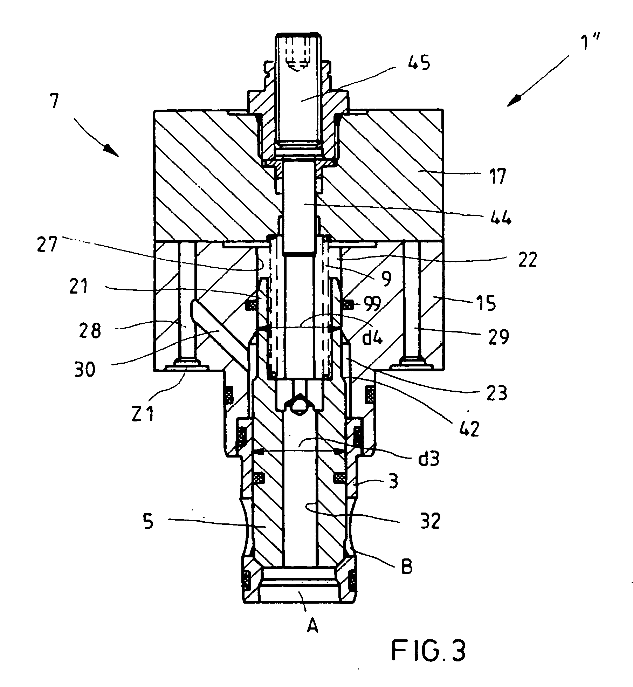

Als weitere Variante des Ventils 1 und 1' zeigt die Figur 3 ein Ventil 1 ", welches als schnelles Sperrventil konfiguriert ist. Das Ventil 1" hat einen ähnlichen Aufbau wie die Ventile 1 oder 1'. Die Unterschiede bzw. Abwandlungen werden nachfolgend erläutert.

Der Ventilkolben 5 des Ventils 1" besitzt einen Betätigungsabschnitt 21, welcher nicht - wie beim Ventil 1 oder 1' - als radialer Vorsprung ausgebildet ist, sondern welcher gegenüber dem in der Ventilbuchse 3 geführten Abschnitt des Ventilkolbens 5 nach einer Stufe 42 radial zurückgesetzt ist. Die Hauptbohrung 27 im Zwischendeckel 15 ist ebenfalls an einer Schulter entsprechend verengt, so dass der Betätigungsabschnitt 21 im oberen, verengten Abschnitt der Hauptbohrung 27 geführt ist. Es werden wiederum zwei Betätigungsdruckräume 22 und 23 ausgebildet.

Eine Druckbeaufschlagung des vom Funktionsdeckel 17 begrenzten Betätigungsdruckraums 22 hat eine Krafteinwirkung auf den Ventilkolben 5 in Schließrichtung zur Folge. Aufgrund der radial zurückgesetzten Ausbildung des Betätigungsabschnitts 21 bewirkt auch eine Druckbeauschlagung des vom Ventilkolben 5 und von der Ventilbuchse 3 begrenzten ringförmigen Betätigungsdruckraums 23 eine Krafteinwirkung auf den Ventilkolben 5 in Schließrichtung. Die dafür maßgebliche Betätigungsfläche entspricht der Differenz der Kreisfläche (p/4)*d3², mit welcher der Ventilkolben 5 in die Ventilbuchse 3 eintaucht, von der Kreisfläche (p/4)*d4², mit welcher der Betätigungsabschnitt 21 in der verengten Hauptbohrung 27 geführt ist.

Am Funktionsdeckel 17 ist eine Hubbegrenzungsanordnung vorgesehen. Diese umfasst einen Stift 44, welcher durch den Funktionsdeckel hindurchgeführt ist und in die Hauptbohrung 27 des Zwischendeckels vorsteht, und eine Verstellung 45, durch welche die Tiefe, mit der der Stift 44 in die Hauptbohrung 27 vorsteht, einstellbar ist. Zwischen dem Stift 44 und dem Funktionsdeckel 17 sind geeignete Dichtungen vorgesehen.

Wie bei dem Sperrventil 1' ist auch durch den Ventilkolben 5 des Sperrventils 1" ein Kanal 32 geführt, welcher den Betätigungsdruckraum 22 mit dem Verbraucheranschluss A verbindet. Der Ventilkolben 5 des Sperrventils 1" besitzt jedoch auch eine vom Verbraucheranschluss B aus beaufschlagbare Ringfläche.

Die Stirnfläche, mit welcher der Ventilkolben 5 den Anschluss A absperrt, ist geringfügig größer als die Fläche, mit welcher der Betätigungsabschnitt 21 des Ventilkolbens 5 den Betätigungsdruckraum 22 begrenzt. Bei dieser Flächenkonfiguration öffnet der Ventilkolben 5 bei entlasteten Steuerdruckraum 23 die Verbindung A-B sobald der Druck in A an der Flächendifferenz der Stirnflächen des Steuerkolbens 5 ausreicht, um die Vorspannkraft der Feder 9 zu überwinden. Auch wenn der Anschluss B mit Druck beaufschlagt wird, erfolgt ein Öffnen des Ventils 1" gegen die Feder 9. Mittels Druckbeaufschlagung des Steuerdruckraums 23 über den Steueranschluss Z1 bzw. den Kanal 28 lässt sich die Verbindung A-B sperren. Der Sperrvorgang kann sehr schnell erfolgen, da die in Öffnungsrichtung wirksamen Kräfte gering sind, und da der ringförmig ausgebildete Steuerdruckraum 23 nur über ein geringes Volumen verfügt.

Die Ansteuerung des Steuerdruckraum 23 kann über den Steueranschluss Z1 direkt aus dem Steuerblock 13 erfolgen, in welchen das Ventil 1" eingesetzt ist. Alternativ kann auf dem Steuerdeckel 17 ein Vorsteuerventil angeordnet sein, durch welches der Steuerdruckraum 23 willkürlich mit Vorsteuerdruck verbindbar ist oder durch welches er entlastet werden kann. Im Steuerblock 13 wäre dann kein Z1-Anschluss gebohrt. Anstelle des Kanals 32 kann beim Ventil 1" - und übrigens auch beim Ventil 1' - eine Verbindung des Anschlusses A mit dem Steuerdruckraum 22 über durch den Zwischendeckel 15 und den Funktionsdeckel 17 verlaufende Kanäle erfolgen.

Wenn alternativ die dem Verbraucheranschluss A zugewandte Stirnfläche des Ventilkolbens 5 etwas kleiner ist als die Stirnfläche, mit welcher der Ventilkolben 5 den Steuerdruckraum 22 begrenzt, besitzt das Ventil 1" die Funktion eines Rückschlagventils. Bei Druckbeaufschlagung aus dem Anschluss A würde das Ventil 1" sperren, bei Druckbeaufschlagung aus dem Anschluss B hingegen öffnen, einen entsprechend geringen Druck am Anschluss A vorausgesetzt. Durch Druckbeaufschlagung des Steuerdruckraums 23 erfolgt in diesem Fall ein Sperren der Verbindung von B nach A.

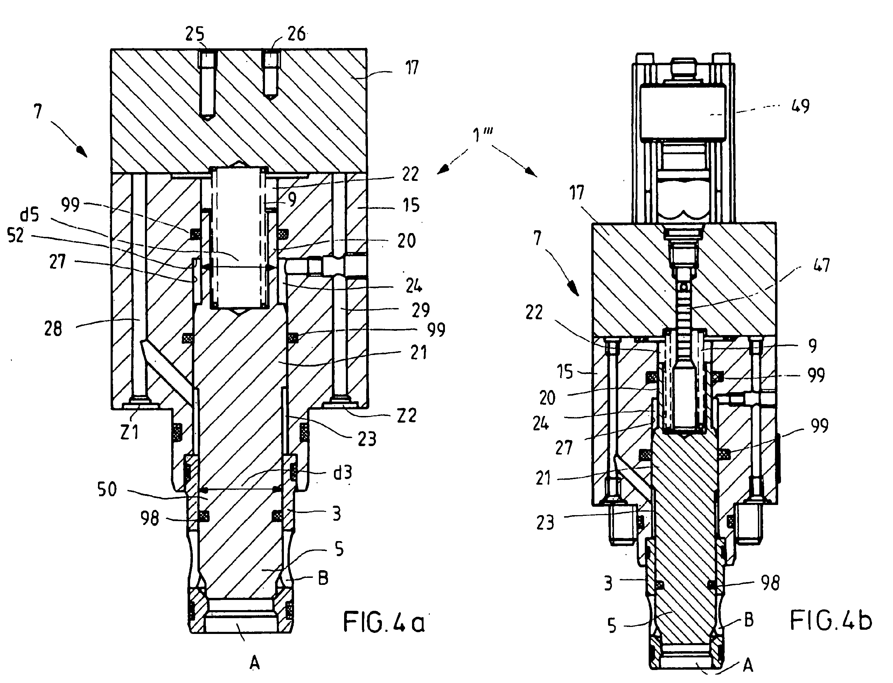

Gemäß den Figuren 4a und 4b sind des Weiteren dreistufige Varianten eines Aktivlogikventils 1'" dargestellt. Gegenüber den vorherigen Varianten und Ausführungsformen sind lediglich geringfügige Abwandlungen am Ventilkolben 5 und dem Zwischendeckel 15 erforderlich, um die dreistufige Bauform zu erhalten.

Der Ventilkolben 5 besitzt von dem in die Ventilbuchse 3 eingesetzten Hauptstufenabschnitt 50 ausgehend zunächst einen radial vorspringenden Betätigungsabschnitt 21. An den Betätigungsabschnitt 21 schließt sich axial ein weiterer gegenüber dem Betätigungsabschnitt 21 radial zurückspringender Betätigungsabschnitt 20 an. Dabei ist der Durchmesser d5 am Betätigungsabschnitt 20 etwas geringer als der Durchmesser d3 am Hauptstufenabschnitt 50. Der Zwischendeckel 15 ist in Axialrichtung bezüglich der Hauptbohrung 27 etwas länger ausgeführt als bei den zweistufig aufgebauten Ventilen 1, 1' und 1". Die Hauptbohrung 27 weist eine Schulter 52 auf. Sie untergliedert sich mittels der Schulter 52 in einen ersten, der Ventilbuchse 3 zugewandte Bohrungsabschnitt und einen zweiten, dem Funktionsdeckel 17 zugewandten Bohrungsabschnitt, welcher gegenüber dem ersten Bohrungsabschnitt verengt ist. Die Durchmesser des ersten Bohrungsabschnitts und des zweiten Bohrungsabschnitts sind so gewählt, dass der Betätigungsabschnitt 21 im ersten Bohrungsabschnitt geführt ist und der Betätigungsabschnitt 20 im zweiten Bohrungsabschnitt geführt ist. Die Passungen sind recht großzügig ausgelegt. Zur dichten Unterteilung in Druckräume werden Dichtringe 99 verwendet.

Mittels des beschriebenen Ventilkolbens 5 und des Zwischendeckels 15 des Ventils 1'" werden der Betätigungsdruckraum 23 zwischen der Ventilbuchse 3 und dem Betätigungsabschnitt 21, der Betätigungsdruckraum 24 zwischen dem Betätigungsabschnitt 21 und der Stufe 52, und der Betätigungsdruckraum 22 zwischen dem Betätigungsabschnitt 20 und dem Funktionsdeckel 17 abgegrenzt.

Durch Ansteuerung der Betätigungsdruckräume 23 und 24 kann der Ventilkolben 5 in Öffnungsrichtung oder in Schließrichtung verfahren werden. Die Ansteuerung der Betätigungsdruckräume 23 und 24 kann z.B. über ein auf dem Funktionsdeckel 17 angeordnetes Wegeventil erfolgen. Damit kann der durch den Ventilkolben 5 freigegebene Öffnungsquerschnitt der Verbindung A-B proportional verstellt werden. Der Betätigungsdruckraum 22 kann für eine zusätzliche Sperrfunktion oder für einen Druckausgleich des Ventilkolbens 5 hinsichtlich der dem Anschluss A zugewandte Stirnfläche verwendet werden.

Das in der Figur 4b dargestellte Ventil 1'" ist gegenüber dem in Figur 4a dargestellten Ventil um einen Wegsensor 49 ergänzt. Der Wegsensor 49 ist über einen Stift 47 an den Ventilkolben 5 gekoppelt und kann so dessen Position messen. Die Feder 9 liegt an einer tellerartigen Aufweitung des Stifts 47 an und hält diesen in Anlage am Ventilkolben 5. Das in Figur 4b dargestellte Ventil besitzt in Verbindung mit einer Regelelektronik, dem Wegsensor 49 und einem 4/2 Wege-Vorsteuerventil, welches von der Regelelektronik angesteuert wird, die Funktion eines 2/2-Wege-Regelventils, bei dem ein - innerhalb der konstruktiven Vorgaben liegender - willkürlich vorgegebener Öffnungsquerschnitt sicher und schnell eingestellt werden kann. Das besagte 4/2 Wege-Vorsteuerventil könnte aufgrund des Platzbedarfs des Wegsensors 49 seitlich am Funktionsdeckel 17 oder ggf. sogar seitlich am Zwischendeckel 15 montiert werden.

Unabhängig von der jeweiligen zuvor beschriebenen Ventilvariante lassen sich erfindungsgemäß mit einer übersichtlichen, geringen Anzahl unterschiedlicher Ventilkolben 5 und Zwischendeckein 15 je Nenngröße lassen sich erfindungsgemäß eine Vielzahl unterschiedlicher Aktivlogikventile zusammenstellen. Die höchste Variabilität bietet der Funktionsdeckel 17, für den prinzipiell die gesamte Vielfalt der in den Datenblättern RD 21010 und RD 21050 (Steuerdeckel Typ LFA) genannten Druck- und Wegeventilfunktionen zur Verfügung gestellt werden können. Die Ventilbuchse 3 kann sich wenn überhaupt auf wenige Varianten beschränken. Es kann z.B. zwischen einer Sitzventilvariante und einer Sitzschieberventilvariante unterschieden werden. Es wird in diesem Zusammenhang auf die Buchsentypen und Kolbentypen der RD 21010 und RD 21050 (Einbauventil Typ LC) verwiesen. Die Gestaltung des Hauptstufenabschnitts 50 des Kolbens 5 kann dabei den in den Datenblättern RD 21010 und RD 21050 beschriebenen Kolbentypen folgen.

Im Zwischendeckel 15 brauchen übrigens auch nicht alle der 4 beschriebenen Nebenbohrungen 28, 28', 29 und 29' ausgeführt sein. Durch das Fehlen einer Nebenbohrung können steuerblockseitig ausgeführte Steueranschlüsse X, Y, Z1 oder Z2 verschlossen werden. Ebenso können ggf. im Funktionsdeckel 17 vorhandene dem Zwischendeckel 15 zugewandte Anschlüsse durch das Fehlen von Nebenbohrungen im Zwischendeckel 15 verschlossen sein.

Die Montage der Ventile 1', 1" und 1"' gestaltet sich ebenso einfach wie hinsichtlich des Ventils 1 beschrieben. Ventilbuchse 3, Ventilkolben 5 und Zwischendeckel 15 können als vormontierte Baueinheit bereitgestellt werden. Nach Einsetzen dieser vormontierten Baueinheit in einen Steuerblock 13 wird der Funktionsdeckel 17, welcher ggf. schon mit Vorsteuerventilen etc. bestückt ist, aufgeschraubt.

Die vorangegangene Beschreibung und die Figuren dienen lediglich dem besseren Verständnis der vorliegenden Erfindung, sie schränken die Erfindung nicht etwa auf die Ausführungsbeispiele oder die beschriebenen Varianten ein. Die Figuren sind teilweise grob schematisch gehalten, um die Funktionsweisen, Wirkprinzipien, technischen Ausgestaltungen und Merkmale zu verdeutlichen. Grundsätzlich kann jede Funktionsweise, jedes Prinzip, jede technische Ausgestaltung und jedes Merkmal, welches/welche in den Figuren oder im Text gezeigt ist/sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen dem Offenbarungsumfang der Erfindung hinzuzurechnen sind. Dabei sind auch Kombinationen zwischen allen einzelnen Ausführungen im Text, d.h. in jedem Abschnitt des Beschreibungstexts, in den Ansprüchen und auch Kombinationen zwischen verschiedenen Ausführungsbeispielen im Text, in den Ansprüchen und in den Figuren umfasst.

Auch die Ansprüche begrenzen bzw. limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen der Erfindung von dieser Offenbarung umfasst.

Erfindungsgemäß wird bei einem Aktivlogikventil der Ventildeckel axial in zwei Bauteile - einen Zwischendeckel und einen Funktionsdeckel mit Steuerkanal - unterteilt.

### Bezugszeichen

- A: Verbraucheranschluss
- B: Verbraucheranschluss
- X, Y: Steueranschlüsse
- Z1, Z2: Steueranschlüsse
- 1: Ventil
- 1': Ventil
- 1": Ventil
- 1"': Ventil
- 3: Ventilbuchse
- 5: Ventilkolben
- 7: Ventildeckels
- 9: Feder
- 11: Ventilbohrung
- 13: Steuerblock
- 15: Zwischendeckel
- 17: Funktionsdeckel
- 19: Ringkragen
- 20: Betätigungsabschnitt
- 21: Betätigungsabschnitt
- 22: Betätigungsdruckraum
- 23: Betätigungsdruckraum
- 24: Betätigungsdruckraum
- 25: Anschlusskanal
- 25': Anschlusskanal
- 26: Anschlusskanal
- 27: Hauptbohrung
- 28: Nebenbohrung
- 28': Nebenbohrung
- 29: Nebenbohrung
- 29': Nebenbohrung
- 30: Bohrung
- 32: Kanal
- 34: Einbaubohrung
- 36: Einbaubohrung
- 37, 37': Bohrung
- 38: 2/2-Wege-Sitzventil
- 39: Bohrung
- 40: 2/2-Wege-Schaltventil
- 42: Stufe
- 44: Stift
- 45: Verstellung
- 47: Stift
- 49: Wegsensor
- 50: Hauptstufenabschnitt
- 52: Schulter
- 98: Dichtring
- 99: Dichtring

## Patentansprüche

1. Ventil zum Einbau in eine Ventilbohrung eines Gehäuses oder eines Ventilblocks (13), umfassend
eine Ventilbuchse (3) zum Einsetzen in die Ventilbohrung,
einen in der Ventilbuchse (3) axial beweglich geführten Ventilkolben (5), welcher mit einem Betätigungsabschnitt (21) die Ventilbuchse (3) axial überragt, und
einen Ventildeckel (7), welcher dazu vorgesehen ist, über der Ventilbohrung angeordnet zu werden, und welcher zusammen mit dem Betätigungsabschnitt (20, 21) des Ventilkolbens (5) wenigstens einen Betätigungsdruckraum (22, 23, 24) ausbildet,
wobei
der Ventildeckel (7) axial in wenigstens zwei Bauteile unterteilt ist,
wobei ein Zwischendeckel (15) den Betätigungsabschnitt (20, 21) in einer Hauptbohrung (27) führt,
wobei ein Funktionsdeckel (17) auf dem Zwischendeckel (15) abseitig der Ventilbuchse (3) vorgesehen ist, welcher zumindest einen Steuerkanal (25, 25', 26, 37, 37', 39) aufweist,
**dadurch gekennzeichnet, dass**
der Betätigungsabschnitt (20, 21) die Hauptbohrung (27) in einen funktionsdeckelseitigen Betätigungsdruckraum (22) und in einen ventilbuchsenseitigen Betätigungsdruckraum (23, 24) unterteilt,
und dass im Zwischendeckel (15) ein Steuerkanal (28, 29) zu dem ventilbuchsenseitigen Betätigungsdruckraum (23, 24) vorgesehen ist.

2. Ventil nach Anspruch 1, **dadurch gekennzeichnet, dass** eine Bodenfläche der Hauptbohrung (27) des Zwischendeckels (15) am Funktionsdeckel (17) gebildet ist.

3. Ventil nach Anspruch 1 oder 2, **dadurch gekennzeichnet, dass** eine Feder (9) zwischen dem Funktionsdeckel (17) und dem Ventilkolben (5) in der Hauptbohrung (27) angeordnet ist.

4. Ventil nach einem der Ansprüche 1 bis 3, **dadurch gekennzeichnet, dass** der Funktionsdeckel (17) Mittel zur Darstellung einer hydraulischen Funktion aufweist, welche insbesondere umfassen können: ein Vorsteuerventil (38, 40), eine Drossel, eine Anschlussfläche für ein Vorsteuerventil, eine Hubbegrenzung (44, 45), einen Wegsensor (49), eine Schaltstellungsüberwachung.

5. Ventil nach einem der Ansprüche 1 bis 4, **dadurch gekennzeichnet, dass** der Zwischendeckel (15) Mittel zur Darstellung einer hydraulischen Funktion aufweist, welche insbesondere umfassen können: eine Betätigungssperre, eine Hubbegrenzung, einen Wegsensor, eine Schaltstellungsüberwachung, eine Drossel, ein Vorsteuerventil bzw. eine Anschlussfläche für ein Vorsteuerventil.

6. Ventil nach einem der Ansprüche 1 bis 5, **dadurch gekennzeichnet, dass** der Ventilkolben (5) mit dem Betätigungsabschnitt (20, 21) einstückig ausgebildet ist.

7. Ventil nach einem der Ansprüche 1 bis 5, **dadurch gekennzeichnet, dass** der Betätigungsabschnitt an einem Betätigungskolben gebildet ist, welcher an den Ventilkolben axial spielfrei angekoppelt ist.

8. Ventil nach einem der Ansprüche 1 bis 7, **dadurch gekennzeichnet, dass** das Ventil als Sitzventil, oder als Sitz-Schieberventil, jeweils insbesondere als 2/2 Wege-Ventil ausgebildet ist.

9. Ventil nach einem der Ansprüche 1 bis 8, **dadurch gekennzeichnet, dass** auf der dem Funktionsdeckel (17) zugewandten Stirnseite des Zwischendeckels (15) zumindest hinsichtlich von Steueranschlüssen ein normiertes Anschlussbild, insbesondere gemäß der DIN ISO 7368 vorhanden ist.

10. Ventil nach einem der vorangehenden Ansprüche, **dadurch gekennzeichnet, dass** die Ventilbuchse (3) so beschaffen ist, dass sie ohne Überstand in eine normierte Ventilbohrung, insbesondere nach DIN ISO 7368, einsetzbar ist.

11. Ventil nach Anspruch 10, **dadurch gekennzeichnet, dass** der Zwischendeckel (15) eine sich radial erstreckende Anlagefläche für die Ventilbuchse (3) aufweist und/oder dass der Zwischendeckel (15) eine in die Ventilbohrung einsetzbare Auskragung (19) zur Aufnahme der Ventilbuchse (3) aufweist.

12. Ventil nach einem der vorangehenden Ansprüche, **dadurch gekennzeichnet, dass** zwischen der Ventilbuchse (3) und dem Ventilkolben (5) Dichtungsmittel (98) vorgesehen sind.

13. Ventil nach einem der vorangehenden Ansprüche, **dadurch gekennzeichnet, dass** zwischen dem Betätigungsabschnitt (20, 21) und der Hauptbohrung (27) des Zwischendeckels (15) Dichtungsmittel (99) vorgesehen sind.

14. Ventil nach einem der vorangehenden Ansprüche **dadurch gekennzeichnet, dass** zwischen der Ventilbuchse (3) und dem Ventilkolben (5) eine Spielpassung, insbesondere eine Spielpassung H7/e5, H7/f6, H7/g5, H8/e5, H8/f6 oder H8/g5 gemäß DIN 7157 besteht, welche ohne Feinbearbeitung des Ventilkolbens (5) herstellbar ist.

15. Ventil nach einem der vorangehenden Ansprüche, **dadurch gekennzeichnet, dass** zwischen dem Betätigungsabschnitt (20, 21) und der Hauptbohrung (27) eine Spielpassung, insbesondere eine Spielpassung H7/e5, H7/f6, H7/g5, H8/e5, H8/f6 oder H8/g5 gemäß DIN 7157 besteht, welche ohne Feinbearbeitung des Betätigungsabschnitts (20, 21) herstellbar ist.

16. Ventil nach einem der vorangehenden Ansprüche, **dadurch gekennzeichnet, dass** Steueranschlüsse (X, Y, Z1, Z2) und/oder Befestigungsmittel bezüglich der Hauptbohrung (27) des Zwischendeckels (15) so angeordnet sind, dass eine Ausrichtung des Zwischendeckels (15) in vorgegebenen Winkelschritten um die Achse der Ventilbohrung (27) veränderbar ist, insbesondere zum Verbinden eines Steuerkanals (28, 28', 29, 29') des Zwischendeckels (15) mit unterschiedlichen Steueranschlüssen (X, Y, Z1, Z2) des Gehäuses bzw. des Ventilblocks (13).

17. Ventil nach einem der vorangehenden Ansprüche, **dadurch gekennzeichnet, dass** an einer dem Funktionsdeckel (17) abgewandten Stirnseite des Zwischendeckels (15) ein Fixierstift zur Festlegung einer Winkelausrichtung des Zwischendeckels (15) lösbar befestigt ist.

18. Ventil nach einem der vorangehenden Ansprüche, **dadurch gekennzeichnet, dass** die Hauptbohrung (27) an einer funktionsdeckelseitigen Mündung einen kleineren Querschnitt als an einer funktionsdeckelabseitigen Mündung aufweist.

19. Montageverfahren zur Bereitstellung eines Ventils (1, 1', 1", 1'") gemäß einem der Ansprüche 1 bis 18, **dadurch gekennzeichnet, dass** die Ventilbuchse (3), der darin eingesetzten Ventilkolben (5) und der Zwischendeckel (15), in dessen Hauptbohrung (27) der Ventilkolben (5) mit dem Betätigungsabschnitt (20, 21) eingesetzt ist, als vormontierte Baueinheit zur Verfügung gestellt wird.

20. Montageverfahren nach Anspruch 19, **dadurch gekennzeichnet, dass** die vormontierte Baueinheit Dichtmittel, insbesondere Dichtringe (98, 99) zwischen der Ventilbuchse (3) und dem Ventilkolben (5) sowie zwischen dem Betätigungsabschnitt (20, 21) und der Hauptbohrung (27) des Zwischendeckels (15) umfasst.

## Claims

1. Valve to be installed in a valve bore of a housing or of a valve block (13),
comprising
a valve bush (3) for insertion into the valve bore,
a valve piston (5) which is guided axially movably in the valve bush (3) and which projects axially with an actuating portion (21) beyond the valve bush (3), and
a valve cover (7) which is intended to be arranged above the valve bore and which, together with the actuating portion (20, 21) of the valve piston (5), forms at least one actuating pressure space (22, 23, 24),
the valve cover (7) being subdivided axially into at least two components,
an intermediate cover (15) guiding the actuating portion (20, 21) in a main bore (27),
a functional cover (17) being provided on the intermediate cover (15) on the far side of the valve bush (3) and having at least one control duct (25, 25', 26, 37, 37', 39),
**characterized in that**
the actuating portion (20, 21) subdivides the main bore (27) into a functional-cover-side actuating pressure space (22) and a valve-bush-side actuating pressure space (23, 24),
and **in that** a control duct (28, 29) to the valve-bush-side actuating pressure space (23, 24) is provided in the intermediate cover (15).

2. Valve according to Claim 1, **characterized in that** a bottom face of the main bore (27) of the intermediate cover (15) is formed on the functional cover (17).

3. Valve according to Claim 1 or 2, **characterized in that** a spring (9) is arranged between the functional cover (17) and the valve piston (5) in the main bore (27).

4. Valve according to one of Claims 1 to 3, **characterized in that** the functional cover (17) has means for performing a hydraulic function, which means may comprise, in particular, a pilot control valve (38, 40), a throttle, a connection face for a pilot control valve, a stroke limitation device (44, 45), a displacement sensor (49) and switching-position metering.

5. Valve according to one of Claims 1 to 4, **characterized in that** the intermediate cover (15) has means for performing a hydraulic function, which means may comprise, in particular, an actuation lock, a stroke limitation device, a displacement sensor, switching-position monitoring, a throttle, a pilot control valve and a connection face for a pilot control valve.

6. Valve according to one of Claims 1 to 5, **characterized in that** the valve piston (5) is formed in one piece with the actuating portion (20, 21).

7. Valve according to one of Claims 1 to 5, **characterized in that** the actuating portion is formed on an actuating piston which is coupled, free of play axially, to the valve piston.

8. Valve according to one of Claims 1 to 7, **characterized in that** the valve is designed as a seat valve or as a seat slide valve, in each case particularly as a 2/2-way valve.

9. Valve according to one of Claims 1 to 8, **characterized in that**, on that end face of the intermediate cover (15) which faces the functional cover (17), at least in terms of control connections, there is a standardized connection pattern, in particular according to DIN ISO 7368.

10. Valve according to one of the preceding claims, **characterized in that** the valve bush (3) is such that it can be inserted without excess into a standardized valve bore, in particular according to DIN ISO 7368.

11. Valve according to Claim 10, **characterized in that** the intermediate cover (15) has a radially extending bearing face for the valve bush (3), and/or **in that** the intermediate cover (15) has a protrusion (19), insertable into the valve bore, receiving the valve bush (3).

12. Valve according to one of the preceding claims, **characterized in that** sealing means (99) are provided between the valve bush (3) and the valve piston (5).

13. Valve according to one of the preceding claims, **characterized in that** sealing means (99) are provided between the actuating portion (20, 21) and the main bore (27) of the intermediate cover (15).

14. Valve according to one of the preceding claims, **characterized in that** a clearance fit, in particular a clearance fit H7/e5, H7/f6, H7/g5, H8/e5, H8/f6 or H8/g5 according to DIN 7157, which can be made without any precision machining of the valve piston (5), is present between the valve bush (3) and valve piston (5).

15. Valve according to one of the preceding claims, **characterized in that** a clearance fit, in particular a clearance fit H7/e5, H7/f6, H7/g5, H8/e5, H8/f6 or H8/g5 according to DIN 7157, which can be made without any precision machining of the actuating portion (20, 21), is present between the actuating portion (20, 21) and the main bore (27).

16. Valve according to one of the preceding claims, **characterized in that** control connections (X, Y, Z1, Z2) and/or fastening means are arranged with respect to the main bore (27) of the intermediate cover (15) such that an orientation of the intermediate cover (15) can be varied in predetermined angular steps about the axis of the valve bore (27), in particular for connecting a control duct (28, 28', 29, 29') of the intermediate cover (15) to different control connections (X, Y, Z1, Z2) of the housing or valve block (13).

17. Valve according to one of the preceding claims, **characterized in that** a fixing pin for securing an angular orientation of the intermediate cover (15) is fastened releasably to an end face of the intermediate cover (15) which faces away from the functional cover (17).

18. Valve according to one of the preceding claims, **characterized in that** the main bore (27) has a smaller cross section at a functional-cover-side issue than at a functional-cover-remote issue.

19. Assembly method for providing a valve (1, 1', 1", 1"') according to one of claims 1 to 18, **characterized in that** the valve bush (3), the valve piston (5) inserted therein and the intermediate cover (15), in the main bore (27) of which the valve piston (5) is inserted with the actuating portion (20, 21), are made available as a preassembled structural unit.

20. Assembly method according to Claim 19, **characterized in that** the preassembled structural unit comprises sealing means, in particular sealing rings (98, 99), between the valve bush (3) and the valve piston (5) and also between the actuating portion (20, 21) and the main bore (27) of the intermediate cover (15).

## Revendications

1. Vanne à encastrer dans un alésage de vanne d'un carter ou d'un bloc de vanne (13), comprenant :
une douille de vanne (3) à insérer dans l'alésage de vanne ;
un piston de vanne (5) guidé de façon mobile axialement dans la douille de vanne (3) et dépassant axialement de la douille de vanne (3) avec une section d'actionnement (21) ; et
un couvercle de vanne (7) prévu pour être disposé au-dessus de l'alésage de vanne et formant au moins une chambre de pression d'actionnement (22, 23, 24) conjointement avec la section d'actionnement (20, 21) du piston de vanne (5) ;
où :
le couvercle de vanne (7) est divisé dans le plan axial en au moins deux composants ;
un couvercle intermédiaire (15) guide la section d'actionnement (20, 21) dans un alésage principal (27) ;
un couvercle fonctionnel (17) est prévu sur le couvercle intermédiaire (15) à l'écart de la douille de vanne (3), ledit couvercle comportant au moins un canal de commande (25, 25', 26, 37, 37', 39) ;
**caractérisée en ce que** :
la section d'actionnement (20, 21) divise l'alésage principal (27) en une chambre de pression d'actionnement (22) située côté couvercle fonctionnel et en une chambre de pression d'actionnement (23, 24) située côté douille de vanne ; et
un canal de commande (28, 29) conduisant vers la chambre de pression d'actionnement (23, 24) située côté douille de vanne est prévu dans le couvercle intermédiaire (15).

2. Vanne selon la revendication 1, **caractérisée en ce qu'**une surface de fond de l'alésage principal (27) du couvercle intermédiaire (15) est formée au niveau du couvercle fonctionnel (17).

3. Vanne selon la revendication 1 ou 2, **caractérisée en ce qu'**un ressort (9) est disposé dans l'alésage principal (27) entre le couvercle fonctionnel (17) et le piston de vanne (5).

4. Vanne selon l'une quelconque des revendications 1 à 3, **caractérisée en ce que** le couvercle fonctionnel (17) comporte des moyens de représentation d'une fonction hydraulique pouvant notamment comprendre : une vanne de précommande (38, 40), un étranglement, une surface de raccord pour une vanne de précommande, un élément de limitation de levée (44, 45), un capteur de course (49), un système de surveillance de position de commutation.

5. Vanne selon l'une quelconque des revendications 1 à 4, **caractérisée en ce que** le couvercle intermédiaire (15) comporte des moyens de représentation d'une fonction hydraulique pouvant notamment comprendre : un élément de blocage d'actionnement, un élément de limitation de levée, un capteur de course, un système de surveillance de position de commutation, un étranglement, une vanne de précommande et/ou une surface de raccord pour une vanne de précommande .

6. Vanne selon l'une quelconque des revendications 1 à 5, **caractérisée en ce que** le piston de vanne (5) est réalisé d'un seul tenant avec la section d'actionnement (20, 21).

7. Vanne selon l'une quelconque des revendications 1 à 5, **caractérisée en ce que** la section d'actionnement est formée au niveau d'un piston d'actionnement couplé sans jeu dans le plan axial au piston de vanne.

8. Vanne selon l'une quelconque des revendications 1 à 7, **caractérisée en ce que** la vanne prend la forme d'une vanne de siège ou d'une vanne à coulisse de siège, respectivement notamment d'une vanne à 2/2 voies.

9. Vanne selon l'une quelconque des revendications 1 à 8, **caractérisée en ce qu'**une image de raccord normée au moins pour ce qui concerne les raccords de commande, notamment selon la norme DIN ISO 7368, est présente sur le côté avant du couvercle intermédiaire (15) orienté vers le couvercle fonctionnel (17).

10. Vanne selon l'une quelconque des revendications précédentes, **caractérisée en ce que** la douille de vanne (3) est réalisée de façon à pouvoir être insérée sans résistance dans un alésage de vanne normé, notamment selon la norme DIN ISO 7368.

11. Vanne selon la revendication 10, **caractérisée en ce que** le couvercle intermédiaire (15) comporte une surface d'appui s'étendant dans le plan radial pour la douille de vanne (3) et/ou que le couvercle intermédiaire (15) comporte un porte-à-faux (19) pouvant être inséré dans l'alésage de vanne pour recevoir la douille de vanne (3).

12. Vanne selon l'une quelconque des revendications précédentes, **caractérisée en ce que** des moyens d'étanchéité (98) sont prévus entre la douille de vanne (3) et le piston de vanne (5).

13. Vanne selon l'une quelconque des revendications précédentes, **caractérisée en ce que** des moyens d'étanchéité (99) sont prévus entre la section d'actionnement (20, 21) et l'alésage principal (27) du couvercle intermédiaire (15).

14. Vanne selon l'une quelconque des revendications précédentes, **caractérisée en ce qu'**un élément d'ajustement du jeu, notamment un élément d'ajustement du jeu H7/e5, H7/f6, H7/g5, H8/e5, H8/f6 ou H8/g5 selon la norme DIN 7157, est placé entre la douille de vanne (3) et le piston de vanne (5), ledit élément d'ajustement pouvant être fabriqué sans travail de finition du piston de vanne (5).

15. Vanne selon l'une quelconque des revendications précédentes, **caractérisée en ce qu'**un élément d'ajustement du jeu, notamment un élément d'ajustement du jeu H7/e5, H7/f6, H7/g5, H8/e5, H8/f6 ou H8/g5 selon la norme DIN 7157, est placé entre la section d'actionnement (20, 21) et l'alésage principal (27), ledit élément d'ajustement pouvant être réalisé sans travail de finition de la section d'actionnement (20, 21).

16. Vanne selon l'une quelconque des revendications précédentes, **caractérisée en ce que** les raccords de commande (X, Y, Z1, Z2) et/ou les moyens de fixation sont disposés de telle sorte par rapport à l'alésage principal (27) du couvercle intermédiaire (15) qu'une orientation du couvercle intermédiaire (15) peut être modifiée suivant des pas angulaires prédéfinis autour de l'axe de l'alésage de vanne (27), notamment pour relier un canal de commande (28, 28', 29, 29') du couvercle intermédiaire (15) à différents raccords de commande (X, Y, Z1, Z2) du carter et/ou du bloc de vanne (13).

17. Vanne selon l'une quelconque des revendications précédentes, **caractérisée en ce qu'**une tige de fixation est fixée de façon amovible à un côté avant du couvercle intermédiaire (15) opposé au couvercle fonctionnel (17) en vue de déterminer une orientation angulaire du couvercle intermédiaire (15).

18. Vanne selon l'une quelconque des revendications précédentes, **caractérisée en ce que** l'alésage principal (27) comporte une section transversale plus petite au niveau d'une embouchure située côté couvercle fonctionnel qu'au niveau d'une embouchure éloignée du couvercle fonctionnel.

19. Procédé de montage permettant de réaliser une vanne (1, 1', 1", 1ʹʹʹ) selon l'une quelconque des revendications 1 à 18, **caractérisé en ce que** la douille de vanne (3), le piston de vanne (5) inséré à l'intérieur et le couvercle intermédiaire (15) dans l'alésage principal (27) duquel le piston de vanne (5) est inséré avec la section d'actionnement (20, 21) sont mis à disposition sous la forme d'une unité modulaire prémontée.

20. Procédé de montage selon la revendication 19, **caractérisé en ce que** l'unité de construction prémontée comprend des moyens d'étanchéification, notamment des bagues d'étanchéité (98, 99) placées entre la douille de vanne (3) et le piston de vanne (5) ainsi qu'entre la section d'actionnement (20, 21) et l'alésage principal (27) du couvercle intermédiaire (15).
